# EUROPÄISCHE PATENTANMELDUNG

(11) **EP 3 670 393 A1**
(43) Veröffentlichungstag der Anmeldung: **24.06.2020**
(21) Anmeldenummer: 18214158.0
(22) Anmeldetag: 19.12.2018
(51) Int. Cl.: B65G 17/20, B65G 54/02

(54) **MAGNETKUPPLUNGSANORDNUNG IN EINER FÖRDERANLAGE**

(71) Anmelder: Stylogs GmbH, 8190 Birkfeld (AT)
(72) Erfinder:
(74) Vertreter: Patentbüro Paul Rosenich AG

(57) **Zusammenfassung**

Die Erfindung betrifft eine Magnetkupplungsanordnung (10) in einer Förderanlage (100), die wenigstens ein Mitnehmerelement (11) zum Anordnen an einem Zugmittel (120) der Förderanlage umfasst, wobei das Mitnehmerelement (11) einen Aufnahmekörper (12) mit einem Aufnahmeraum (18) zum Aufnehmen von einen Magneten (15) im Aufnahmeraum (18) aufweist, wobei der Magnet (15) an seiner Kupplungsseite (A) mit einer Kupplungsseite (B) eines ferromagnetischen Gegenstücks (43) zur Förderkraftübertragung in kuppelbare Verbindung bringbar ist, oder einen ferromagnetischen Gegenstück für einen Magneten im Aufnahmeraum (18) aufweist, wobei das ferromagnetische Gegenstück an seiner Kupplungsseite (B) mit einer Kupplungsseite (A) eines Magneten zur Förderkraftübertragung in kuppelbare Verbindung bringbar ist. An dem Magneten ist an seiner der Kupplungsseite (A) abgewandten Seite (C) eine ferromagnetische Platte (19) angeordnet, um den Weg der magnetischen Kraftlinien an dieser Seite des Magnets zu verkürzen. Die Erfindung betrifft ein Transportelement und eine Förderanlage sowie ein Verfahren zum Aufbau einer Förderanlage.

## Beschreibung

Die Erfindung betrifft eine Magnetkupplungsanordnung in einer Förderanlage, ein Transportelement für eine Förderanlage, eine Förderanlage sowie ein Verfahren zum Aufbau und zur Wartung einer Förderanlage.

Aus der DE 10 2010 010 107 A1 ist eine Förderanlage für hängende Gegenstände bekannt, bei der in einer Transportschiene ein Trum einer umlaufenden, in einer Förderrichtung antreibbaren Antriebskette angeordnet ist. Die Antriebskette ist mit nach unten vorstehenden Bolzen ausgebildet. Unterhalb der Antriebskette sind in der Transportschiene auf Rollen gelagerte Halteelemente vorgesehen, die an ihrem unteren Ende eine Öffnung zur Aufnahme des Hakens eines Bügels mit einem Kleidungsstück oder einer Transporttasche ausgebildet sind. Die Halteelemente weisen jeweils an ihren oberen Enden Anschläge auf, die zwischen benachbarte Bolzen ragen, so dass eine form- oder reibschlüssige Antriebsverbindung zwischen der Antriebskette und den Halteelementen hergestellt ist.

Nachteilig an dieser bekannten Lösung ist, dass bei einer Störung in der Förderanlage, beispielsweise bei einem Verhaken der Halteelemente in der Förderanlage, die form- oder reibschlüssige Antriebsverbindungen nicht einfach trennbar sind. Dadurch werden die Halteelemente im Falle einer Verklemmung deformiert und müssen relativ aufwendig demontiert und getauscht werden, was einen relativ langen Betriebsausfall der Förderanlage bewirkt.

Aus der EP 0 623 497 B1 ist ein staufähiger Förderer bekannt, bei dem auf einer Tragschiene mittels drehbar gelagerter Rollen gelagerte Träger für Fördergut angeordnet sind und von einem ebenso an der Tragschiene gelagerten Zugmittel in Form eines Reibbands in eine Förderrichtung antreibbar ist. Zum Zweck eines gewünschten Aufstauens von Trägern ist eine Stoppvorrichtung mit einem Haltefinger vorgesehen, der in den Bewegungsraum der Träger einfahrbar ist und auf eine an dem Träger befestigte Spreizvorrichtung einwirkt, womit ein seitliches Verschwenken und damit ein Abheben des Trägers von dem Reibband erfolgt.

Nachteilig an dieser bekannten Lösung ist, dass aufgrund der Reibbandverbindung zwischen dem Reibband und den Trägern eine ständige mechanisch Belastung auf die Träger wirkt, sodass diese nach kurzen Einsatzzeiten ausgetauscht werden müssen.

Die DE 20 2017 107 908 U1 zeigt eine Förderanlage für hängende Gegenstände mit einer umlaufenden, antreibbaren Förderkette, die eine Vielzahl von Mitnehmerelemente aufweist. Weiters weist die Förderanlage eine Vielzahl von Transportelemente auf, wobei jedes Transportelement ein magnetisches Kupplungselement aufweist, wobei die Kupplungselemente der Transportelemente über Magnetkraft berührungslos und lösbar an die Mitnehmerelemente der Förderkette gekoppelt sind.

Nachteilig an dieser bekannten Lösung ist, dass diese Förderanlage nach deren erster Inbetriebnahme fix dimensioniert ist und deren jeweilige Förderkapazität somit endgültig festgelegt ist. Die Förderkraft zwischen dem Kupplungselemente der Transportelemente ist unveränderlich. Die Kupplungskraft gewählter Magnete ist beschränkt. Wünscht man höhere Kupplungskräfte müssten stärkere Magnete installiert werden. Da stärkere Magnete nennenswert teurer sind, kann es vorkommen, dass eine einmal gewählte Kupplungskraft im Betrieb hinsichtlich der Anforderung der Förderkapazität der Förderanlage zu klein wird.

Es ist die Aufgabe der vorliegenden Erfindung, einen oder mehrere Nachteile des Standes der Technik zu beheben. Insbesondere soll eine Magnetkupplungsanordnung in einer Förderanlage geschaffen werden, bei der die Kupplungskräfte grösser sind, ohne stärkere Magnete einzusetzen. Die Herstellkosten sollen so niedrig gehalten werden. Ausserdem sollen Massnahmen getroffen werden, die den Einfluss der Magneten auf die Gesamtanlage durch magnetische Induktion relativ klein halten, so dass die bekannte Magnetkupplungsanordnung im Magnetteil verbessert wird. Da sich die Magnete in der Förderanlage nämlich entlang des Förderstrecke bewegen, können die sich bewegenden Magnete Ströme in elektronische Komponenten induzieren, welche unerwünscht sind, da diese zu Störungen in den elektronischen Komponenten führen kann. Weiters soll eine Förderanlage geschaffen werden, deren Flexibilität erhöht wird und deren Herstellungskosten gering sind sowie ein Transportelement geschaffen werden, dass zuverlässig mit der Förderanlage zusammenwirken kann. Ausserdem soll ein verbessertes Verfahren zum Aufbau und zur Wartung einer Förderanlage geschaffen werden, womit die Förderkapazität und die Montagesicherheit mit dieser Förderanlage erhöht wird.

Die Aufgabe wird durch die in den unabhängigen Ansprüchen definierten Anordnungen, Vorrichtungen und Verfahren gelöst. Vorteilhafte Weiterbildungen sind in der Beschreibung, in den Figuren und in den abhängigen Patentansprüchen dargelegt.

Eine erfindungsgemässe Magnetkupplungsanordnung in einer Förderanlage umfasst wenigstens ein Mitnehmerelement zum Anordnen an einem Zugmittel der Förderanlage. Das Mitnehmerelement weist - wie bereits bekannt - einen Aufnahmekörper mit einem Aufnahmeraum zum Aufnehmen von (a)) wenigstens einem Magneten im Aufnahmeraum auf, wobei der Magnet an seiner Kupplungsseite mit einer Kupplungsseite eines ferromagnetischen Gegenstücks zur Förderkraftübertragung in kuppelbare Verbindung bringbar ist.

Alternativ weist das Mitnehmerelement - wie bereits bekannt - einen Aufnahmekörper mit einem Aufnahmeraum zum Aufnehmen von (b)) wenigstens einem ferromagnetischen Gegenstück für einen Magneten im Aufnahmeraum aufweist, wobei das ferromagnetische Gegenstück an seiner Kupplungsseite mit einer Kupplungsseite eines anderen Magneten zur Förderkraftübertragung in kuppelbare Verbindung bringbar ist.

An dem Magneten ist neu an wenigstens einer der Kupplungsseite abgewandten Seite eine ferromagnetische Platte angeordnet, um den Weg der magnetischen Kraftlinien an dieser Seite des Magnets zu verkürzen.

Die erfindungsgemässe ferromagnetische Platte am Magneten, lenkt die von diesem Magneten an dessen an der ferromagnetischen Platte angeordneten Seite austretenten magnetischen Kraftlinien derart ab, dass sie sich verkürzen und somit verdichten. Damit vergrössert sich die auf das wenigstens eine ferromagnetische Gegenstück wirkende Förderkraft, sodass das Transportelement zuverlässig mitgenommen werden kann, ohne dass die Fördergeschwindigkeit in der Förderanlage reduziert werden muss. Darüber hinaus kann die für eine bestimmte Mitnahmekraft bzw. Förderkraft notwendige Baugrösse des wenigstens einen Magneten verkleinert werden, wodurch die Herstellungskosten in einer Förderanlage verringert werden. Anders ausgedrückt, kann bei gleichem Magnet eine grössere Kupplungskraft und somit eine grössere Förderkraft erzeugt werden.

Die ferromagnetische Platte verdichtet jedoch nicht nur die magnetischen Kraftlinien, sondern schirmt weitere Komponenten in der Förderanlage von den magnetischen Kraftlinien des Magneten ab. Damit kann ein unerwünschtes Magnetisieren oder Induzieren von Magnetfeldern von/in weitere/n Komponenten - z.B. elektronische Komponenten, wie beispielsweise elektronische Sensoren - in der Förderanlage erfindungsgemäss verhindert werden.

Darüber hinaus kann gleichzeitig bei gleich dimensionierten/ausgelegten Magneten die Förderkapazität und/oder die Transporteffizienz der Förderanlage erhöht werden, wobei Gegenstände mit unterschiedlicher Grösse und/oder Gewicht gleichzeitig in der Förderanlage befördert werden können.

Die Magnetkupplungsanordnung ermöglicht wie an sich bekannt, nun aber verbessert - ein berührungsloses Fördern zumindest eines Transportelements. Am oder im Transportelement werden - wie an sich bekannt - Gegenstände angeordnet, welche entlang der Förderanlage bewegt werden. Das Transportelement umfasst zum Zusammenwirken mit dem wenigstens einen Magneten zumindest abschnittsweise das wenigstens eine ferromagnetische Gegenstück.

Um die grösstmögliche Kupplungskraft auf das wenigstens eine ferromagnetische Gegenstück ausüben zu können, sollte darauf geachtet werden, dass das wenigstens eine ferromagnetische Gegenstück nicht magnetisch gesättigt wird. Dabei gilt das Prinzip, dass bei einem grösseren Volumen des wenigstens einen ferromagnetischen Gegenstück eine magnetische Sättigung später erreicht wird, als bei einem kleineren Volumen des ferromagnetischen Gegenstücks, und umgekehrt.

Vorteilhaft weist das wenigstens eine ferromagnetische Gegenstück daher ein Volumen von 50 mm³ bis 400 mm³ auf. Damit kann die magnetische Sättigung des wenigstens einen ferromagnetischen Gegenstücks ausreichend verhindert werden. Beispielsweise ist das ferromagnetische Gegenstück aus einer Stahllegierung. Insbesondere weist das ferromagnetische Gegenstück die Spezifikation 1.0715 (11SMN30+Ci) auf. Insbesondere ist das Volumen des wenigstens einen ferromagnetischen Gegenstücks proportional zu der Magnetisierungssättigung des wenigstens einen Magneten auszulegen. Ist das Volumen des wenigstens einen ferromagnetischen Gegenstücks unterdimensioniert, liegt die magnetische Sättigung darin vor, sodass die vom wenigstens einen Magneten erzeugbare maximale Förderkraftübertragung im wenigstens einen ferromagnetischen Gegenstück nicht erreicht werden kann.

Vorteilhaft weist das wenigstens eine ferromagnetische Gegenstück einen quadratische Fläche auf, sodass die projizierte Fläche der Kupplungsseite des wenigstens einen ferromagnetischen Gegenstücks vergrössert werden kann. Damit kann das ferromagnetische Gegenstück einen erhöhten magnetischen Feldlinienfluss vom Magneten aufnehmen, sodass die Kupplungskraft auf das Transportelement durch diese Weiterentwicklung der Erfindung erhöht wird. Dabei ist jedoch zu achten, dass die Magnetisierung im wenigstens einen ferromagnetischen Gegenstück nicht gesättigt wird.

Vorzugsweise ist das wenigstens eine ferromagnetische Gegenstück ebenfalls ein Magnet. Dabei ist der Magnetpol des ferromagnetischen Gegenstücks komplementär zu dem Magnetpol des wenigstens einen Magneten am wenigstens einen Mitnehmerelement angeordnet, sodass die Kupplungskraft weiter erhöht werden kann. Beispielsweise kann dadurch das Baugewicht des Aufbaus der Magnetkupplungsanordnung reduziert werden. Wenn nämlich das ferromagnetische Gegenstück selbst als Magnet ausgebildet ist, kann es bei gleicher Kupplungskraft, ein kleineres Volumen aufweisen.

Eine komplementäre Anordnung von Magneten an der Kupplungsseite umfasst zumindest zwei Magnete, wobei diese Magnete so angeordnet sind, dass der Südpol eines ersten Magneten dem Nordpol eines zweiten Magneten gegenübersteht, oder umgekehrt.

Bevorzugt ist jedem Magneten - also auch dem, der das ferromagnetische Gegenstück bildet - an wenigstens einer seiner der Kupplungsseite abgewandten Seiten eine ferromagnetische Platte zugeordnet, wobei die Magnete so angeordnet sind, dass sich Nordpole und Südpole einander gegenüberstehen. Beispielsweise kann ein erster Magnet am wenigstens einen Mitnehmerelement angeordnet sein und ein zweiter Magnet an dem Transportelement angeordnet sein, wobei der erste Magnet komplementär zum zweiten Magnet angeordnet ist und an dem ersten Magnet eine erste ferromagnetische Platte angeordnet ist und am zweiten Magnet eine zweite ferromagnetische Platte angeordnet ist. Damit wird der Weg der jeweiligen magnetischen Kraftlinien der jeweiligen Magnete verkürzt und somit deren Kupplungskraft bzw. die Förderkraftübertragung erfindungsgemäss verstärkt.

Insbesondere ist der an der ferromagnetischen Platte angeordnete wenigstens eine Magnet diametral magnetisiert. Damit werden die magnetischen Kraftlinien im Bereich des ferromagnetischen Gegenstücks geschlossen, sodass dieses einfach magnetisiert werden kann.

Bevorzugt ist die ferromagnetische Platte an wenigstens einer Plattenseite winkelförmig ausbildet. Dabei liegt eine Plattenseite der ferromagnetischen Platte direkt an dem wenigstens einen Magneten an und die im Winkel dazu stehende Plattenseite der ferromagnetischen Platte wirkt haltend mit dem Aufnahmekörper des wenigstens einen Mitnehmerelements oder mit dem Grundkörper des Transportelements zusammen.

Bevorzugterweise erstreckt sich zwischen der Kupplungsseite des wenigstens einen Magneten und der Kupplungsseite des wenigstens einen ferromagnetischen Gegenstücks ein einstellbarer Luftspalt, dessen räumliche Erstreckung in zumindest eine Richtung zwischen 0.05 mm und 5 mm liegt. Der Luftspalt bewirkt ein berührungsloses Mitnehmen der Transportelemente, wodurch der Materialverschleiss am Transportelement, welches typischerweise in einer Förderschiene der Förderanlage geführt wird, beim Fördern durch die Förderanalage verringert wird. Ausserdem reduziert der Luftspalt die Gefahr der magnetischen Sättigung im ferromagnetischen Gegenstück, sodass eine einstellbare Förderkraftübertragung gewährleistet wird.

Der Luftspalt zwischen dem wenigstens einen Magneten und dem wenigstens einen ferromagnetischen Gegenstück kann beispielsweise mit einer Magnetisierungsvorrichtung eingestellt werden. Dabei kann der wenigstens eine Magnet so stark magnetisiert werden, sodass seine erhöhte Magnetkraft auf das ferromagnetische Gegenstück wirkt. Dadurch wird das ferromagnetische Gegenstück, welches sich beispielsweise am Transportelement befindet, stärker angezogen, sodass sich der Luftspalt verkürzt. Die Förderschiene, in welcher das Transportelement angeordnet ist, verhindert, dass das ferromagnetische Gegenstück direkt am Magneten anliegen kann. Der Luftspalt zwischen wenigstens einen Magneten und dem wenigstens einen ferromagnetischen Gegenstück kann sich im Wesentlichen in vertikaler Richtung erstrecken. Damit werden vertikal angeordnete Transportelemente förderbar.

Der Luftspalt zwischen wenigstens einen Magneten und dem wenigstens einen ferromagnetischen Gegenstück kann sich jedoch alternativ auch im Wesentlichen in horizontaler Richtung erstrecken. Beispielsweise kann die Kupplungsseite des wenigstens Magneten und die Kupplungsseite des wenigstens einen ferromagnetischen Gegenstücks sich horizontal gegenüberstehen. Damit kann ein Transportelement, welches sich seitlich von dem wenigstens einem Mitnehmerelement befinden, ebenfalls einfach gefördert werden.

Bevorzugt ist der Luftspalt zwischen dem wenigstens einen Magneten und dem wenigstens einen ferromagnetischen Gegenstück mithilfe einer mechanischen Stellvorrichtung einstellbar. Die Stellvorrichtung kann dabei entweder an dem Zugmittel der Förderanlage angeordnet oder an der Förderschienenanordnung der Förderanlage angeordnet sein. Als Stellvorrichtung kann eine Einlage - beispielsweise eine Kunststoffeinlage - dienen, welche den Abstand zwischen dem Zugmittel und dem Transportelement verändert und somit den Luftspalt verändert.

Alternativ oder ergänzend umfasst die Stellvorrichtung einen Hubantrieb, welcher den Abstand zwischen dem am Zugmittel angeordneten wenigstens einen Magneten und dem am Transportelement angeordneten wenigstens einen ferromagnetischen Gegenstück - gegebenenfalls ferngesteuert - verändert. Damit kann der Luftspalt sehr fein und gegebenenfalls stufenlos eingestellt werden.

Bevorzugt ist die räumliche Erstreckung des Luftspalts in zumindest eine Richtung zwischen 0.1 mm und 3 mm. Damit wird die Förderkraftübertragung auf das Transportelement weiter verbessert und eine unerwünschte Magnetisierung des ferromagnetischen Gegenstücks verhindert.

Vorzugsweise ist die ferromagnetische Platte zur Beeinflussung der Förderkraftübertragung lösbar am Magneten angeordnet. Damit kann die ferromagnetische Platte am wenigstens einen Mitnehmerelement oder am wenigstens einen ferromagnetischen Gegenstück separiert und ausgetauscht werden. Ist die ferromagnetische Platte entfernt, sinkt die Kupplungskraft aber auch gleichzeitig das Gewicht des Aufbaus.

Alternativ oder ergänzend ist die ferromagnetische Platte relativ zum wenigstens einen Magneten einstellbar angeordnet. Beispielsweise ist die ferromagnetische Platte drehbar zum Magneten angeordnet. Ein Verdrehen der ferromagnetischen Platte verändert - bei entsprechendem Aufbau der ferromagnetischen Platte - den Weg der magnetischen Kraftlinien und somit die räumliche Dichte der magnetischen Kraftlinien. Damit kann die magnetische Flussdichte an der Kopplungsseite des Magneten verändert werden, sodass die Förderkraftübertragung auf das Transportelement eingestellt werden kann. Die ferromagnetische Platte kann zur Verbesserung dieses Effekts auch eine bevorzugte metallurgische Molekularstruktur (Orientierung) aufweisen, beispielsweise eine Walzrichtung.

Insbesondere ist in einem anderen Ausführungsbeispiel die ferromagnetische Platte stoffschlüssig mit dem wenigstens einen Magneten verbunden. Somit ist die ferromagnetische Platte fest mit diesem Magneten verbunden - beispielsweise angeklebt - und ein unerwünschtes Verrutschen der ferromagnetische Platte relativ zu diesem Magneten ist verhinderbar. Damit kann die Förderkraftübertragung in der Magnetkupplungsanordnung konstant gehalten werden.

Bevorzugterweise ist dem oder jedem Magneten wenigstens ein weiterer Magnet zur Seite gestellt, der ebenso an wenigstens einer der Kupplungsseite abgewandten Seite mit der ferromagnetischen Platte verbunden ist. Damit kann die Förderkraftübertragung, beispielsweise bei bedarfsweise hohen Kupplungskräften, weiter verbessert werden.

Vorteilhaft ist der weitere Magnet an wenigstens seiner der Kupplungsseite abgewandten Seite ebenso mit einer weiteren ferromagnetischen Platte stoffschlüssig verbunden. Damit kann ein unerwünschtes Verrutschen der ferromagnetischen Platte verhindert werden, sodass die Feldliniendichte unverändert bleibt. Ausserdem wirkt die ferromagnetische Platte gegebenenfalls gleichzeitig als Haltevorrichtung für die Magneten, insbesondere wenn eine Plattenseite der ferromagnetischen Platte direkt an dem weiteren Magneten anliegt und die im Winkel dazu stehende Plattenseite der ferromagnetischen Platte haltend mit dem Aufnahmekörper des wenigstens einen Mitnehmerelements oder mit dem Grundkörper des Transportelements zusammenwirkt.

Vorzugsweise ist der weitere Magnet seitlich benachbart zu dem oder jedem Magneten angeordnet. Damit kann einerseits eine effektive Feldlinienverteilung in der Magnetkupplungsanordnung geschaffen werden, sodass die Förderkraftübertragung auf das Transportelement verbessert wird.

Bevorzugt sind die Magnetpole des weiteren Magneten komplementär zu den Magnetpolen des Magnets ausgerichtet. Eine komplementäre Ausrichtung der beiden Magnete zueinander erhöht die magnetische Feldliniendichte im Grenzbereich der beiden Magnete zueinander. Dadurch kann das ferromagnetische Gegenstück in der Umgebung dieses Grenzbereichs stabil gehalten werden.

Bevorzugterweise ist zwischen dem Magnet und dem wenigstens einen weiteren Magneten eine Isolierschicht vorgesehen. Die Isolierschicht kann ein unmagnetisches Material umfassen, womit die magnetischen Kraftlinien einfach umgelenkt werden können und somit Magnete kleinerer Bauformen in der Magnetkupplungsanordnung eingesetzt werden können.

Bevorzugt ist die Isolierschicht durch einen Luftspalt gebildet. Ein Luftspalt zwischen dem wenigstens einen Magneten und dem wenigstens einen weiteren Magneten ermöglicht einerseits eine leichte Bauform des zumindest einen Mitnehmerelements oder des Transportelements. andererseits wirkt dieser Aufbau im Kupplungsfall noch stärker zentrierend auf das ferromagnetische Gegenstück.

Vorzugsweise sind die Magnete und die weiteren Magnete quaderförmig ausgebildet. quaderförmige Magnete lassen sich grossflächig dichtend aneinander anordnen, sodass deren magnetische Kraftlinien im Grenzgebiet eine besonders geeignete Feldlinienverteilung aufweisen. Damit kann die Magnetkupplungsanordnung kompakt gebaut werden.

Alternativ sind die Magnete und weiteren Magnete zylinderförmig ausgebildet, womit die Magnete einfach montiert werden können, so dass diese zentral benachbart zu dem ferromagnetischen Gegenstück angeordnet werden können.

Bevorzugt sind die Magnete und die weiteren Magnete aus gesintertem Material aufgebaut. Damit werden leistungsstarke Magneten realisierbar. Beispielsweise wird gesinterte Neodym verwendet, insbesondere der Güteklasse N35 bis N54.

Vorteilhaft sind die Magnete und die weiteren Magnete axial magnetisierst. Ein axial magnetisierter Magnet weist entlang seiner Längsachse abschnittsweise einen Südpol und einen Nordpol auf. Axial magnetisierte Magnete lassen sich einfach aneinander anordnen.

Alternativ sind die Magnete und die weiteren Magnete diametral magnetisierst. Ein diametral magnetisierter Magnet weist normal zu seiner Längsachse einen Südpol und einen Nordpol auf. Diametral magnetisierte Magnete lassen sich einfach übereinander anordnen.

Insbesondere sind die Magnete an deren Oberfläche chemisch vernickelt. Damit können die Magnete selbst in feuchter oder aggressiver Umgebung nicht korrodieren. Sie können auch einfacher gereinigt werden und sind abriebfest. Weiters kann man an der vernickelten Oberfläche besser allfällige Metallspäne ausnehmen, die sich allenfalls wegen der Magnetwirkung angeheftet haben.

Bevorzugterweise weist der Aufnahmekörper zumindest zwei Aufnahmespangen auf, die zumindest die ferromagnetische Platte formschlüssig halten. Damit kann verhindert werden, dass die ferromagnetische Platte in eine ungewünschte Position verrutscht bzw. in der Förderanlage verloren gehen. Die formschlüssige Verbindung zwischen dem Aufnahmekörper und der ferromagnetischen Platte ermöglicht einen einfachen Austausch der ferromagnetischen Platte.

Insbesondere ist der Aufnahmekörper aus unmagnetischem Material aufgebaut, wodurch der Aufnahmekörper die Feldlinienverteilung nicht oder kaum beeinflusst.

Bevorzugt ist der Aufnahmekörper aus Kunststoff aufgebaut. Damit kann das Gewicht des zumindest eine Mitnehmerelements klein gehalten werden und ist die Herstellung z.B. als Spritzgussteil einfach.

Vorzugsweise weist der Aufnahmekörper zumindest einen Zugmittelanschluss für das Anschliessen des wenigstens einen Mitnehmerelements an ein Zugmittel auf. Der Zugmittelanschluss am zumindest einem Mitnehmerelement ermöglicht eine einfache Installation am Zugmittel, sodass bei einem Austausch des zumindest einen Mitnehmerelements die Förderanlage nur eine kurze Stillstands-Zeit aufweist.

Bevorzugt ist der zumindest eine Zugmittelanschluss als Bolzen ausgebildet. Der Bolzen kann direkt in das Zugmittel eingeführt werden und wieder davon gelöst werden. Beispielsweise kann der Bolzen bei einer Förderkette als Zugmittel einerseits eine Haltefunktion ausüben und andererseits zwei benachbarte Förderkettenglieder kraftschlüssig zusammenhalten, was zusätzliche Massnahmen erspart.

Insbesondere umfasst der Zugmittelanschluss zwei Bolzen, sodass sich der Mitnehmer und somit der wenigstens eine Magnet am Zugmittel ortsfest angeordnet ist - beispielsweise gegen ein Verdrehen relativ zur Förderrichtung des Zugmittels gesichert ist. Damit wird eine Änderung des Betrags und/oder der Richtung der magnetischen Kraftlinien verhindert und die Förderkraftübertragung auf das Transportelement konstant gehalten.

Ein erfindungsgemässes Transportelement für eine Förderanlage umfasst einen Grundkörper, der einen Kupplungsabschnitt und einen Förderabschnitt umfasst, wobei der Kupplungsabschnitt zum Ankoppeln an die Förderanlage ausgebildet ist und zumindest ein ferromagnetisches Gegenstück aufweist und der Förderabschnitt Fördermittel zum Führen in der Förderanlage aufweist. Das zumindest eine ferromagnetische Gegenstück ist in dem Grundkörper eingearbeitet und somit kraft- oder formschlüssig damit verbunden. Alternativ ist das zumindest eine ferromagnetische Gegenstück lösbar am Kupplungsabschnitt angeordnet.

Das Transportelement besteht typischerweise aus einem Kunststoff, da das Transportelement leicht und widerstandsfähig sein sollte. Das zumindest eine ferromagnetische Gegenstück kann in einer Aufnahme am Kupplungsabschnitt formschlüssig angeordnet werden, oder in den Kunststoff eingearbeitet z.B. durch ihn umspritzt werden, beispielsweise als eine Vielzahl von ferromagnetischer Gegenstücke, sodass der Kupplungsabschnitt selbst ferromagnetisch wird. Dadurch kann das Gesamtgewicht des Transportelements verringert werden.

Bevorzugt ist das zumindest eine ferromagnetische Gegenstück in dem Kupplungsabschnitt mithilfe eines Umformverfahrens eingearbeitet. Beispielsweise wird das ferromagnetische Gegenstück als eine Vielzahl von ferromagnetischen Gegenstücken oder als Ganzes in den Kupplungsabschnitt eingespritzt. Dabei ist zumindest der Kupplungsabschnitt des Transportelements als 2-Komponenten-Kunststoffspritzgussteil - allenfalls mit Faserverstärkung - ausgebildet.

Vorzugsweise weist der Grundkörper des Transportelements einen Kommunikationsabschnitt auf, der eine Erkennungseinrichtung umfasst. Damit kann zumindest die Position des Transportelements in der Förderanlage ermittelt werden. Weiters kann die Erkennungseinrichtung Information zum am Transportelement angeordnetes Produkt beinhalten.

Insbesondere umfasst der Grundkörper einen Lastabschnitt, welcher zum Anordnen von Lastgegenständen ausgebildet ist. Der Lastabschnitt ist jener Abschnitt des Transportelements, welcher von dem Zugmittel am Weitesten beabstandet ist und der bei einer Pendelbewegung des Transportelements an der Förderanlage, mit einer sehr hohen Wahrscheinlichkeit mit einem weiteren Element der Förderanlage kollidiert. Aufgrund der - wie hier vorliegend beschriebenen-Magnetkupplungsanordnung kann neu und vorteilhafterweise gewährleistet werden, dass weder das Transportelement noch ein anderer Bestandteil der Förderanlage mechanisch verformt wird, da sich das Transportelement bei einer zu starken Pendelbewegung aus der Magnetkupplungsanordnung automatisch lösen kann und nicht gegen Widerstand und unter Materialverformung weitergezwungen wird.

Bevorzugt weist das Transportelement eine Eindringsicherung auf. Die Eindringsicherung verhindert das Eindringen des Lastabschnitts in das Zugmittel und/oder in eine Förderschiene der Förderanlage. Die Eindringsicherung ist vorteilhaft an dem Lastabschnitt angeordnet oder ist ein Bestandteil des Lastabschnitts. Die Eindringsicherung kann ein verbreiteter Abschnitt am Lastabschnitt sein, dessen Breite derart dimensioniert ist, dass dieser Abschnitt nicht in die Öffnung der Förderschiene eindringen kann. Damit kann ein kostengünstiges und langlebiges Transportelement hergestellt werden und insbesondere die Betriebsstabilität der Förderanlage verbessert werden.

Eine erfindungsgemässe Förderanlage zum Befördern von hängenden oder stehenden Gegenständen umfasst ein Zugmittel und einen Förderantrieb zum Antreiben des Zugmittels, wobei die Förderanlage zumindest ein Mitnehmerelement und zumindest ein Transportelement umfasst, zwischen denen eine wie hier beschriebene Magnetkupplungsanordnung vorhanden ist.

Die Förderanlage kann erfindungsgemäss mithilfe der dort angeordneten Magnetkupplungsanordnungen flexibel erweitert werden. Das Zugmittel einer Förderanlage und somit die daran angeordneten Mitnehmer können typischerweise entlang eines geschlossenen Förderstrecke bewegt werden. Dabei kann sich das Zugmittel in einer ersten Förderschiene einer Förderschienenanordnung bewegen und die an der Förderanlage angeordneten Transportelemente in einer zweiten Förderschiene der Förderschienenanordnung bewegen. Die Förderstrecke kann neben einer im Wesentlichen horizontal verlaufende Förderstrecke auch eine Steigung bzw. ein Gefälle aufweisen. Die wie hier beschriebene Magnetkupplungsanordnung kann daran angeordnete Transportelemente entlang der Steigungen der Förderstrecke befördern. Darüber hinaus kann die Magnetkupplungsanordnung auch dafür genutzt werden jene allenfalls frei beweglichen Transportelemente zu bremsen, welche durch ein Gefälle im Förderstrecke infolge Schwerkraft beschleunigt würden. Dabei kann beispielsweise ein Transportelement auf bis zu 15 ° Gefälle gebremst bzw. entschleunigt werden. Damit können die ansonst notwendigen mechanischen Stopper im Bereich des Gefälles entlang des Förderstrecke wegfallen, sodass die Gesamtkosten der Förderanlage reduziert werden und die Flexibilität der Förderanlage erhöht wird. Weiters können Wartungskosten reduziert werden, da die ansonsten notwenigen Stopper infolge von Verschleiss von Zeit zu Zeit ausgetauscht werden müssen.

Insbesondere ist das Zugmittel eine Förderkette. Eine Förderkette ist ein zuverlässiges Zugmittel, das beliebig adaptiert werden kann, indem beispielsweise die Anzahl der Förderkettenglieder erhöht oder verringert wird.

Vorzugsweise ist eine Stellvorrichtung zum Einstellen eines Abstands zwischen dem Zugmittel und dem zumindest einem Transportelement vorhanden. Die Stellvorrichtung ermöglicht das Einstellen des Abstands zwischen dem wenigstens einen Magneten und dem wenigstens einen ferromagnetischen Gegenstück, wodurch der Luftspalt in der Magnetkopplungsanordnung einstellbar ist.

Bevorzugt weist die Förderanlage ein weiteres Mitnehmerelement auf, wobei das weitere Mitnehmerelement am Zugmittel zum ersten Mitnehmerelement beabstandet ist. Mehrere Mitnehmerelemente erhöhen die Förderkapazität der Förderanlage, da jedes Mitnehmerelement zumindest ein Transportelement befördern kann.

Bevorzugt ist der Abstand zwischen dem Mitnehmerelement und dem weiteren Mitnehmerelement entlang des Zugmittels zwischen 10 mm und 1500 mm einstellbar. Dadurch kann der Teilungsabstand entlang des Zugmittels eingestellt werden, sodass die Förderanlage mit unterschiedlich grossen Transportelementen bestückt werden kann bzw. an die an den Transportelemente angeordnete Lasten bestückt werden können. Damit wird die Flexibilität der Förderanlage weiter erhöht.

Insbesondere ist der Abstand zwischen dem Mitnehmerelement und dem weiteren Mitnehmerelement entlang des Zugmittels zwischen 15 mm und 250 mm einstellbar. Damit kann ein guter Kompromiss zwischen Förderkapazität der Förderanlage und Flexibilität der Förderanlage erreicht werden.

Ein erfindungsgemässes Verfahren zum Aufbau und zur Wartung einer wie hier beschriebenen Förderanlage umfasst die folgenden Schritte:
- Zur Verfügungstellung einer Magnetisierungsvorrichtung an der Förderanlage, welche temporär an der Förderanlage angeordnet sein kann, oder auch ein Bestandteil der Förderanlage sein kann.
- Magnetisierung wenigstens eines Magneten oder wenigstens eines ferromagnetischen Gegenstücks mit einer Magnetkraft mithilfe der Magnetisierungsvorrichtung vor Inbetriebnahme der Förderanlage.

Damit können die Magnete und/oder die Transportelemente in der Magnetkupplungsanordnung individuell magnetisiert werden. Die Magnetisierung der jeweiligen Magnete oder Transportelemente wird mit einer Magnetisierungsvorrichtung erfindungsgemäss erst am Montageort der Förderanlage vollzogen.

Vorzugsweise erfolgt vor der Inbetriebnahme die Magnetisierung eines weiteren Magneten oder eines weiteren ferromagnetischen Gegenstücks mit einer Magnetkraft mithilfe der Magnetisierungsvorrichtung.

Finden sich mehrere Magnete als Kupplungselemente zu den ferromagnetischen Gegenstücken entlang eines Zugmittels, so können diese auch unterschiedlich magnetisiert werden, um ihnen unterschiedliche Kupplungs-/Förderkräfte zuzuordnen. Damit wird die Flexibilität der Förderanlage weiter erhöht.

Eine erfindungsgemässe Magnetisierungsvorrichtung zur Magnetisierung wenigstens eines Magneten oder wenigstens eines ferromagnetischen Gegenstücks wird an einer installierten Förderanlage mit einer Magnetkupplungsanordnung verwendet. Damit kann der wenigstens eine Magnet oder das wenigstens eine ferromagnetische Gegenstück mit einer beliebigen vordefinierten Magnetkraft magnetisiert werden, sodass die Flexibilität der wie hier vorliegend beschrieben Förderanlage erhöht werden.

Befindet sich eine Magnetisierungsvorrichtung an der Förderanlage, können die Magnete auch im Wartungsfall nachmagnetisiert werden.

Die Magnetisierungsvorrichtung könnte aber auch dazu verwendet werden, allfällig unerwünscht magnetisierte Gegenstücke zu entmagnetisieren, so dass im Wartungsfall wieder die volle Funktionstüchtigkeit und die volle Förderkraft wiederhergestellt wird.

Eine erfindungsgemässe Förderanlage zum Befördern von hängenden Gegenständen umfasst ein Zugmittel und einen Förderantrieb zum Antreiben des Zugmittels, wobei die Förderanlage zumindest ein zumindest ein Transportelement umfasst, wobei das Zugmittel eine elektromagnetisches Schwebesystem oder ein Elektrodynamisches Schwebesystem umfasst.

Die Transportelemente können bei einer derartigen Förderanlage an jeder Position der Förderanlage in die Förderstrecke eingeschleust und ausgeschleust werden. Damit wird nicht nur die Förderkapazität erhöht, sondern auch eine flexibel gestaltete Förderanlage geschaffen. Die zuvor beschriebene Förderanlage ermöglicht eine stufenlose Einstellung der magnetischen Förderkraftübertragung auf das Transportelement, indem beispielsweise der die Ströme im Elektrodynamisches Schwebesystem stufenlos erhöht oder vermindert werden.

Weitere Vorteile, Merkmale und Einzelheiten der Erfindung ergeben sich aus der nachfolgenden Beschreibung, in der unter Bezugnahme auf die Figuren Ausführungsbeispiele der Erfindung beschrieben sind. Aufzählungen wie erste, zweite, dritte oder weitere dienen lediglich zur Identifikation der Bauteile.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: eine erste Ausführungsform einer erfindungsgemässen Magnetkupplungsanordnung,
- Fig. 2: eine zweite Ausführungsform einer erfindungsgemässen Magnetkupplungsanordnung,
- Fig. 3: eine dritte Ausführungsform einer erfindungsgemässen Magnetkupplungsanordnung,
- Fig. 4: eine Simulation der magnetischen Feldlinienverteilung in einer Magnetkupplungsanordnung gemäss Fig. 1 oder Fig. 2,
- Fig. 5: eine vierte Ausführungsform einer erfindungsgemässen Magnetkupplungsanordnung,
- Fig. 6: eine Simulation der magnetischen Feldlinienverteilung in einer Magnetkupplungsanordnung gemäss Fig. 5,
- Fig. 7: eine vierte Ausführungsform einer erfindungsgemässen Magnetkupplungsanordnung,
- Fig. 8: eine erste Ausführungsform eines erfindungsgemässen Transportelements,
- Fig. 9: eine weitere Ausführungsform eines erfindungsgemässen Transportelements,
- Fig. 10: eine erste Ausführungsform einer erfindungsgemässen Förderanlage,
- Fig. 11: die Förderanlage gemäss Fig. 11 in einer weiteren Ansicht, und
- Fig. 12: eine weitere Ausführungsform einer erfindungsgemässen Förderanlage.

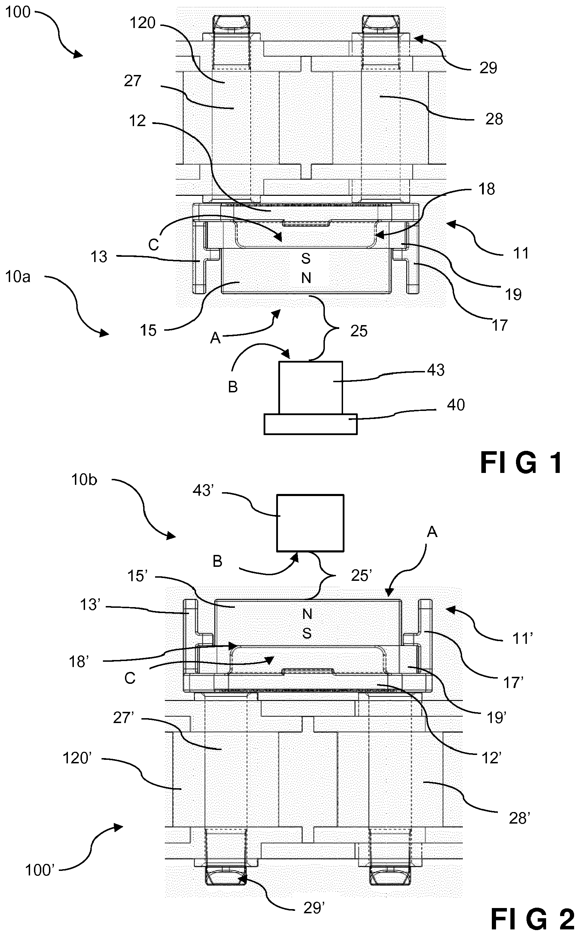

Fig. 1 zeigt eine Magnetkupplungsanordnung 10a in einer Förderanlage 100. Die Magnetkupplungsanordnung 10a umfasst ein Mitnehmerelement 11, das an einem Zugmittel 120 der Förderanlage 100 angeordnet ist. Das Mitnehmerelement 11 weist einen aus Kunststoff bestehenden Aufnahmekörper 12 mit einem Aufnahmeraum 18 zum Aufnehmen von wenigstens einem (wie dargestellt) Magneten 15 auf. Der Magnet 15 ist an seiner Kupplungsseite A mit einer Kupplungsseite B eines ferromagnetischen Gegenstücks 43 zur Förderkraftübertragung in kuppelbare Verbindung bringbar. An dem Magneten 15 ist an der der Kupplungsseite A abgewandten Seite C eine ferromagnetische Platte 19 angeordnet, um den Weg der magnetischen Kraftlinien an dieser Seite C des Magnets 15 zu verkürzen. Die ferromagnetische Platte 19 ist in diesem Ausführungsbeispiel stoffschlüssig mit dem Magneten 15 verbunden und wird von den Aufnahmespangen 13, 17 im Aufnahmeraum 18 gehalten. Die Aufnahmespangen 13, 17 sind elastisch, sodass die ferromagnetische Platte 19 und damit auch der Magnet 15 vom Mitnehmerelement 11 separiert werden können.

Das Mitnehmerelement 11 weist am Aufnahmekörper 12 zwei Bolzen 27, 28 auf, welche mit Zugmittel 120 der Förderanlage 100 verbunden sind. Die Bolzen 27, 28 werden mithilfe einer Sicherungseinrichtung 29 am Zugmittel gehalten.

Der ferromagnetische Gegenstück 43 weist die Spezifikation 1.0715 (11SMn30+Ci) auf und ist an der Oberfläche - bevorzugt, chemisch - vernickelt. Das ferromagnetische Gegenstück 43 kann gewalzt oder kaltgezogen sein. Der Magnet 15 besteht aus Nickel. Alternativ kann der Magnet 15 aus Eisen oder Cobalt oder einer Legierung daraus bestehen. Selbstverständlich können auch Seltenerden-Magnete eingesetzt werden.

Zwischen der Kupplungsseite A des Magneten 15 und der Kupplungsseite B des ferromagnetischen Gegenstücks 43 erstreckt sich ein Luftspalt 25, dessen Erstreckung mithilfe der veränderlichen Magnetkraft einstellbar ist. Die räumliche Erstreckung ist zwischen 0.05 mm und 5 mm einstellbar.

Das ferromagnetische Gegenstück 43 ist an ein Transportelement 40 angeordnet, mit welchem insbesondere hängende Gegenstände transportiert werden. Das ferromagnetische Gegenstück 43 weist einen quaderförmigen Aufbau mit einem Volumen von - in diesem Ausführungsbeispiel - etwa 150 mm³ auf.

Fig 2 zeigt eine Magnetkupplungsanordnung 10b in einer Förderanlage 100', welche vergleichbar zur Förderanlage 100 gemäss Fig. 1 aufgebaut ist. Dabei weist die Förderanlage 100' ein Zugmittel 120' auf, dass ein Mitnehmerelement 11' mit einem Aufnahmekörper 12' und mit einem Aufnahmeraum 18' zum Aufnehmen von einem Magneten 15' umfasst. Der Magnet 15' ist an seiner Kupplungsseite A mit einer Kupplungsseite B eines ferromagnetischen Gegenstücks 43' zur Förderkraftübertragung in kuppelbare Verbindung bringbar. In dieser Magnetkupplungsanordnung 10b sind das Zugmittel 120 mit dem daran angeordneten Mitnehmerelement 11' und das ferromagnetische Gegenstücks 43' räumlich um 180° vertauscht. An dem Magneten 15' ist an der, der Kupplungsseite A abgewandten Seite C eine ferromagnetische Platte 19' angeordnet, um den Weg der magnetischen Kraftlinien an dieser Seite C des Magnets 15' zu verkürzen. Die ferromagnetische Platte 19' ist stoffschlüssig mit dem Magneten 15' verbunden und wird von den Aufnahmespangen 13', 17' im Aufnahmeraum 18' gehalten. Die Aufnahmespangen 13', 17' sind elastisch, sodass die ferromagnetische Platte 19' und somit auch der Magnet 15' vom Mitnehmerelement 11' separiert werden können. Das Mitnehmerelement 11' weist am Aufnahmekörper 12' zwei Bolzen 27', 28' auf, welche mit Zugmittel 120' der Förderanlage 100' verbunden sind. Die Bolzen 27', 28' werden mithilfe einer Sicherungseinrichtung 29' am Zugmittel gehalten.

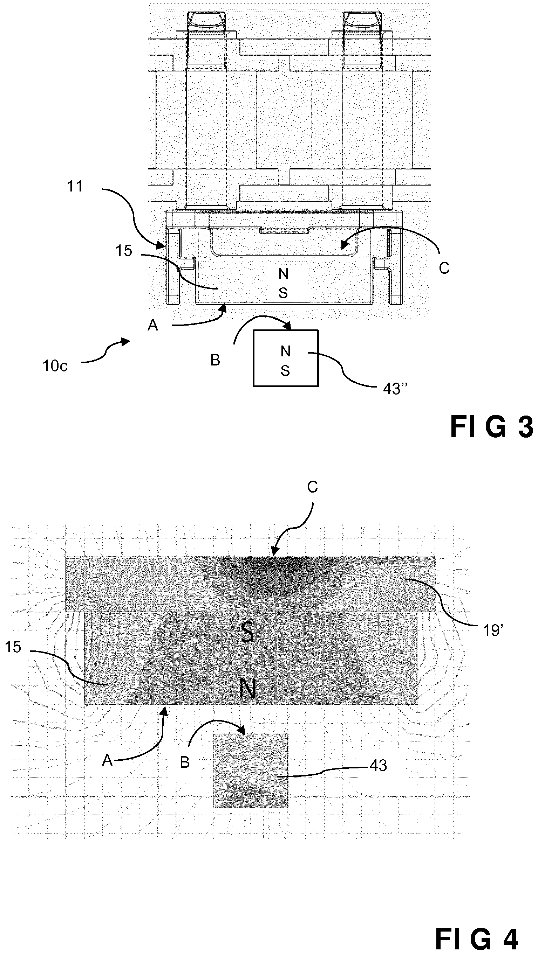

Fig. 3 zeigt eine weitere Ausführungsform einer Magnetkupplungsanordnung 10c, dessen Aufbau im Wesentlichen der Magnetkupplungsanordnung 10a gemäss Fig. 1 entspricht. Dabei unterscheidet sich die Magnetkupplungsanordnung 10c von der Magnetkupplungsanordnung 10a jedoch darin, dass das ferromagnetische Gegenstück 43" ebenfalls ein Magnet ist. Dabei sind die Magnetpole (N-S) des ferromagnetische Gegenstück 43" komplementär zu den Magnetpolen (S-N) des Magneten 15 im Mitnehmerelement 11 angeordnet.

Alternativ zu den Magnetkupplungsanordnung 10a bis 10c weist eine weitere Magnetkupplungsanordnung ein Mitnehmerelement 11 mit einem Aufnahmekörper 12 auf, dessen Aufnahmeraum 18 ein ferromagnetisches Gegenstück 43 aufweist, wobei das ferromagnetische Gegenstück 43 an seiner Kupplungsseite B mit einer Kupplungsseite A eines Magneten 15 zur Förderkraftübertragung in kuppelbare Verbindung bringbar ist. Dabei ist der Magnet 15 an einem Transportelement 40 angeordnet (nicht gezeigte Alternative).

Fig. 4 zeigte eine beispielhafte Feldlinienverteilung in den Magnetkupplungsanordnungen 10a, 10b gemäss den Fig. 1 und Fig. 2. Die magnetischen Feldlinien werden im axial magnetisierten Magneten 15 erzeugt und treten an dessen Nordpol N und dessen Südpol S aus dem Magneten 15 aus. Die Feldlinien würden ohne der ferromagnetische Platte 19 und ohne dem ferromagnetischen Gegenstück 43 gleichmässig und büschelförmig verteilt aus dem einen Pol des Magneten austreten und in den anderen Pol des Magneten 15 wieder eintreten und - wie bekannt - eine geschlossenen Feldlinienverlauf bilden. Das Vorhandensein der ferromagnetische Platte 19 verkürzt jedoch den Weg der magnetischen Kraftlinien und sättigt die ferromagnetische Platte 19 an der Kopplungsseite A des Magneten 15 abgewandten Seite C (dunkler Bereich in 19). Damit kann eine erhöhte Magnetkraft auf die Kopplungsseite B des ferromagnetischen Gegenstücks 43 übertragen werden, sodass der Magnet 15 und das ferromagnetische Gegenstück 43 in eine kraftvollere kuppelbare Verbindung bringbar sind.

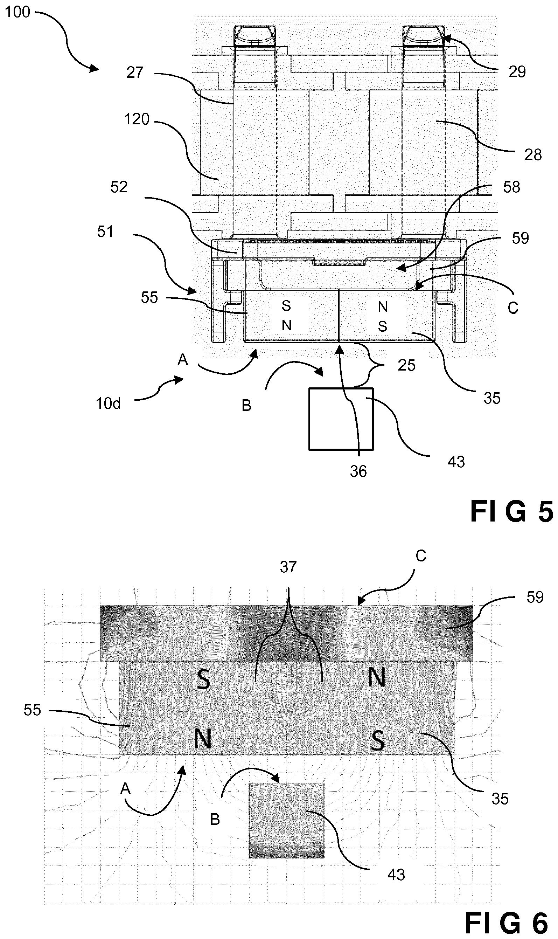

Fig. 5 zeigt eine weitere Magnetkupplungsanordnung 10d in einer Förderanlage 100, welche im Wesentlichen mit den zuvor beschriebenen Magnetkupplungsanordnungen 10a bis 10c vergleichbar ist. Die Magnetkupplungsanordnung 10d umfasst ein Mitnehmerelement 51 zum Anordnen an dem Zugmittel 120 der Förderanlage 100. Das Mitnehmerelement 51 weist einen Aufnahmekörper 52 mit einem Aufnahmeraum 58 zum Aufnehmen von einem Magneten 55 und einem Magneten 35 auf. Dabei sind die Magnetpole (N-S) des Magneten 55 komplementär zu den Magnetpolen (S-N) des weiteren Magneten 35 ausgerichtet. Die Magnete 55, 35 sind benachbart zueinander angeordnet und liegen aneinander an. Zwischen den Magneten 55 und dem Magneten 35 kann eine Isolierschicht 36 aus unmagnetischem Material oder einfach ein Abstand (Luft) angeordnet sein. Die Magnete 55, 35 sind an deren Kupplungsseite A mit einer Kupplungsseite B eines ferromagnetischen Gegenstücks 43 zur Förderkraftübertragung in kuppelbare Verbindung gebracht. An den Magneten 55, 35 ist an deren der Kupplungsseite A abgewandten Seite C eine ferromagnetische Platte 59 angeordnet, um den Weg der magnetischen Kraftlinien an dieser Seite C der Magneten 55, 35 zu verkürzen. Wie bereits in den Fig. 1 bis Fig.3 beschrieben, ist die ferromagnetische Platte 59 stoffschlüssig mit den Magneten 55, 35 verbunden und wird in dem Mitnehmerelement 52 gehalten.

Fig. 6 zeigte eine symbolische Feldlinienverteilung in der Magnetkupplungsanordnung 10d gemäss der Fig. 5. Die magnetischen Feldlinien werden in den axial magnetisierten Magneten 55 und 35 erzeugt und treten an deren Nordpol N und deren Südpol S aus. Die Magnete 55 ist seitlich benachbart zu dem Magneten 35 angeordnet, wobei die Magneten 55, 35 komplementär zueinander ausgerichtet sind. Die komplementäre Ausrichtung der beiden Magnete 55, 35 zueinander erhöht die magnetische Feldliniendichte im Grenzbereich 37 der beiden Magnete 35, 55. Die ferromagnetische Platte 59 verkürzt den Weg der magnetischen Kraftlinien. Sie ist im Grenzbereich der beiden Magneten 35, 55 an der Kopplungsseite A der Magneten 55, 35 abgewandten Seite C (dunkler Bereich in 59) gesättigt.

Durch diese Massnahme kann eine erhöhte Magnetkraft auf die Kopplungsseite B des ferromagnetischen Gegenstück 43 übertragen werden, sodass die Magnete 55, 35 und das ferromagnetische Gegenstück 43 bei gleich starkem Magneten 55, 35 in eine kraftvollere kuppelbare Verbindung bringbar sind und eine verbesserte Förderkraftübertragung erfolgt.

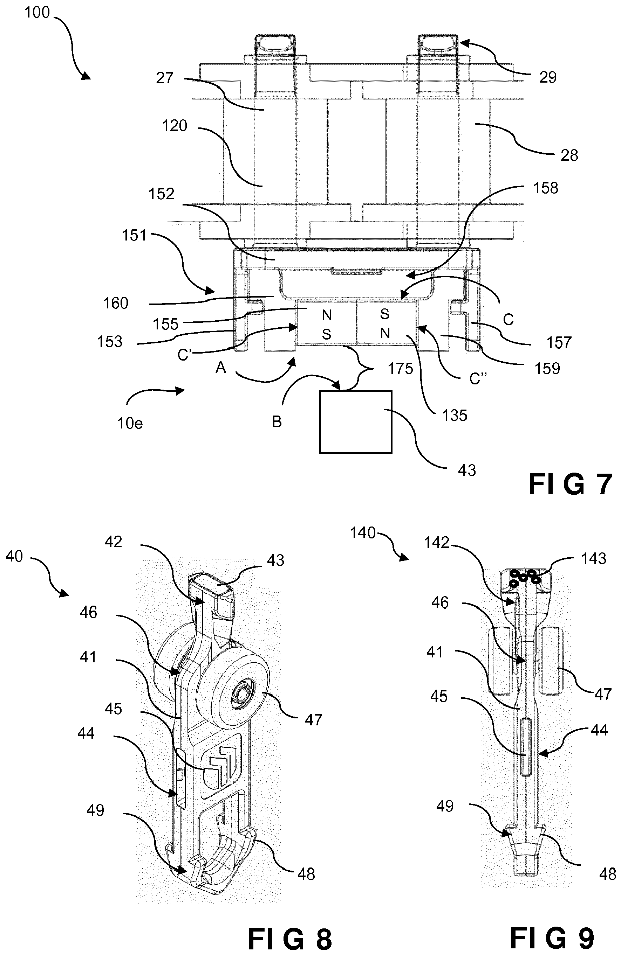

Fig. 7 zeigt eine weitere Magnetkupplungsanordnung 10e in einer Förderanlage 100, welche im Wesentlichen mit den zuvor beschriebenen Magnetkupplungsanordnung 10a bis 10d vergleichbar ist. Die Magnetkupplungsanordnung 10e umfasst ein Mitnehmerelement 151 zum Anordnen dem Zugmittel 120 der Förderanlage 100. Das Mitnehmerelement 151 weist einen Aufnahmekörper 152 mit einem Aufnahmeraum 158 zum Aufnehmen von einem Magneten 155 und einem Magneten 135 auf. Dabei sind die Magnetpole (N-S) des Magneten 155 komplementär zu den Magnetpolen (S-N) des Magneten 135 ausgerichtet. Die Magnete 155, 135 sind benachbart zueinander angeordnet und liegen aneinander an. Die Magnete 155, 135 sind an deren Kupplungsseite A mit einer Kupplungsseite B des ferromagnetischen Gegenstücks 43 zur Förderkraftübertragung in kuppelbare Verbindung gebracht, wobei dazwischen vertikal ein Luftspalt 175 ausbildet ist. An den Magneten 155, 135 ist an deren der Kupplungsseite A abgewandten bzw. benachbarten Seite C' und C" jeweils eine ferromagnetische Platte 159 und 160 angeordnet, um den Weg der magnetischen Kraftlinien an dieser Seite C' und C" der Magneten 155, 135 zu verkürzen. Die ferromagnetischen Platten 159 und 160 sind in diesen Ausführungsbeispielen stoffschlüssig mit den jeweiligen Magneten 155, 135 verbunden. Die ferromagnetischen Platten 159 und 160 sind hier winkelförmig ausgebildet. Dabei liegt eine der Plattenseiten der jeweiligen ferromagnetischen Platten 159 und 160 direkt an den jeweiligen Magneten 155, 135 an. Die im Winkel dazu stehende Plattenseite der jeweiligen ferromagnetischen Platte 159 und 160 werden im Mitnehmerelement 152 mithilfe der Aufnahmespangen 153 und 157 gehalten.

In einer nicht gezeigten Weiterbildung der hierin beschriebenen Magnetkupplungsvorrichtung (10a-e) ist die ferromagnetische Platte 59 zur Beeinflussung der Förderkraftübertragung lösbar an den Magneten 15, 55, 35 angeordnet. Alternativ oder ergänzend ist die ferromagnetische Platte 19, 59 relativ zu den Magneten 15, 55, 35 einstellbar angeordnet. Beispielsweise ist die ferromagnetische Platte 19, 59 drehbar zum Magneten 15, 55, 35 angeordnet. Ein Verdrehen der ferromagnetischen Platte 19, 59 verändert den Weg der magnetischen Kraftlinien und somit die räumliche Dichte der magnetischen Kraftlinien (Fig. 1 bis Fig. 7).

Fig. 8 zeigt eine erste Ausführungsform eines Transportelements 40. Das Transportelement 40 für eine Förderanlage 100 weist einen Grundkörper 41 auf, der einen Kupplungsabschnitt 42 und einen Förderabschnitt 46 umfasst, wobei der Kupplungsabschnitt 46 zum Ankoppeln an die Förderanlage 100 ausgebildet ist. Das in den Fig. 1 bis 8 beschriebene ferromagnetische Gegenstück 43, 43', 43" ist am Kupplungsabschnitt 46 lösbar angeordnet. Der Förderabschnitt 46 weist als Fördermittel 47 zwei Förderrollen auf. Der Grundkörper 41 des Transportelements 40 weist einen Kommunikationsabschnitt 44 mit einer Erkennungseinrichtung 45 auf. Der Grundkörper 41 weist weiters einen Lastabschnitt 49 auf, welcher zum Anordnen von Lastgegenständen ausgebildet ist. Der Kommunikationsabschnitt 44 ist zwischen dem Kupplungsabschnitt 44 und dem Lastabschnitt 49 angeordnet.

Fig. 9 zeigt ein Transportelement 140, das im Wesentlichen dem Transportelement 40 gemäss Fig. 9 entspricht. Dabei unterscheidet sich dieses Transportelement 140 vom zuvor beschrieben Transportelement 40 indem das ferromagnetische Gegenstück 143 mehrteilig aufgebaut und in dem Grundkörper 41 eingearbeitet ist. Die Transportelemente 40, 140 bestehen typischerweise aus einem Kunststoff. Das mehrteilige ferromagnetische Gegenstück 143 ist derart in den Grundkörper 41 eingearbeitet, sodass der Kupplungsabschnitt 142 selbst ferromagnetisch wirkt. Dabei besteht der Kupplungsabschnitt 142 aus einem 2-Komponenten-Kunststoffspritzgussteil, in welchem die ferromagnetischen Gegenstücke 143 - wie gezeigt - verteilt mithilfe eines Spritzgussverfahrens eingearbeitet sind. Die ferromagnetischen Gegenstücke 143 können auch unterschiedlich zur gezeigten Anordnung im Transportelement 40, 140 verteilt sein.

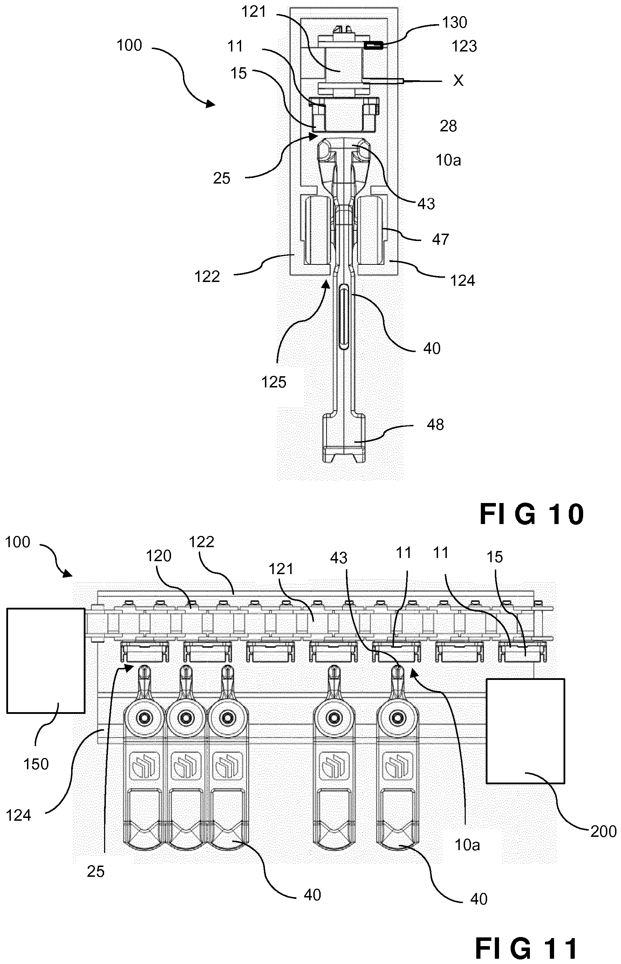

Die Fig. 10 und Fig 11 zeigen eine erfindungsgemässe Förderanlage 100. Die hier beschriebene Förderanlage 100 und deren darin angeordneten Komponenten werden anhand der Magnetkopplungsanordnung 10a gemäss der Fig. 1 beschrieben. Die Magnetkopplungsanordnung 10a in der Förderanlage 100 ist jedoch auch mit einer der zuvor beschriebenen Magnetkopplungsanordnungen 10b bis 10e gemäss den Fig. 2 bis Fig 8 austauschbar.

Die Förderanlage 100 zum Befördern von hängenden Gegenständen umfasst ein Zugmittel 120, welches als Förderkette 121 ausgebildet ist und mit einem Förderantrieb 150 antreibbar ist. Die Förderanlage 100 weist eine Förderschienenanordnung 122 mit einer ersten Förderschiene 123 und einer zweiten Förderschiene 124 auf. Die erste Förderschiene 123 nimmt die Förderkette 121 auf. An der Förderkette 121 sind die Mitnehmerelemente 11 mit dem Magnet 15 angeordnet, welche mithilfe der Bolzen 28 an der Förderkette 121 gehalten werden. Das Transportelement 40 ist mithilfe der Fördermittel 47 on der zweiten Förderschiene 124 gelagert, erstreckt sich durch die Förderschienenöffnung 125 und kann sich darin entlang der Förderstrecke bewegen. Das Transportelement 40 weist eine Eindringsicherung 48 auf, die verhindert, dass das Transportelement 40 vollständig in eine Förderschienenanordnung 122 eindringen kann. Das Transportelemente 40 ist an dem Fördermittel 47 bewegbar bzw. schwenkbar angeordnet. Eine starke Pendelbewegung des Transportelement 40 könnte dazu führen, dass das Transportelement 40 mit dem Lastabschnitt 49 vollständig in die Förderschienenöffnung 125 eintaucht und sich dort verkeilt. Dies wird durch die Kippsicherung 48, welche als zum Grundkörper 41 verbreiterter Abschnitt am Lastabschnitt 49 ausgeführt ist, verhindert.

Die Förderkette 121 wird samt dem Mitnehmerelement 11 entlang der Förderstrecke bewegt, wobei der Magnet 15 mit dem ferromagnetischen Gegenstück 43 am Transportelement 43 magnetisch gekoppelt ist und dieses entlang der Förderstrecke bewegt. Die Förderkette 121 weist an jedem Förderkettenglied ein Mitnehmerelement 11 auf. Dabei ist es möglich, dass ein Mitnehmerelement 11 ein Transportelement 40 fördert oder ein Mitnehmerelement 11 mehrere Transportelemente 40 fördert. Dies wird mit der für jedes Mitnehmerelement 11 separat einstellbare Förderkraft gewährleistet, wobei sich der Luftspalt 25 jeweils separat einstellen kann und somit die auf das ferromagnetische Gegenstück 43 übertragene Förderkraft variieren kann.

An der Förderkette 121 können die jeweiligen Mitnehmerelemente 11 voneinander zwischen 10 mm und 1500 mm beabstandet sein. Dieser Teilungsabstand ist ebenfalls gemäss einer besonderen Ausbildung der Erfindung einstellbar und gegebenenfalls von dem Abstand der Förderkettenglieder abhängig.

An der Förderanlage 100 ist eine Stellvorrichtung 130 zum Einstellen eines Abstands X zwischen dem Zugmittel 120 und dem zumindest einem Transportelement 40 vorhanden, wodurch der Luftspalt 25 in der hier vorliegend beschriebenen Magnetkopplungsanordnung 10a-d einstellbar ist.

Als Stellvorrichtung 130 kann eine Einlage - beispielsweise eine Kunststoffeinlage - dienen, welche den Abstand X verändert. Alternativ oder ergänzend umfasst die Stellvorrichtung 130 einen Hubantrieb, welcher den Abstand X zwischen dem Förderkette 121 und dem Transportelement 40 verändert. Damit kann der Luftspalt 25 sehr fein eingestellt werden.

Die für jedes Mitnehmerelement 11 separat einstellbare Magnetkraft wird beim Magnetisieren mittels einer Magnetisierungsvorrichtung 200 eingestellt, welche temporär oder permanent an der Förderanlage 100 angeordnet werden kann.

Mit der hier vorliegend beschriebenen Förderanlage 100 kann ein Verfahren zum Aufbau und zur Wartung realisiert werden, welches die folgenden Schritte umfasst:
- Zur Verfügungstellung einer Magnetisierungsvorrichtung 200 an der Förderanlage 100,
- Magnetisierung wenigstens eines Magneten 15 oder wenigstens eines ferromagnetischen Gegenstücks 43 mit einer Magnetkraft mithilfe der Magnetisierungsvorrichtung 200 vor Inbetriebnahme der Förderanlage 100.

Damit können die Magnete 15 und/oder die Transportelemente 40 in der Magnetkupplungsanordnung 10a individuell magnetisiert werden.

Beispielsweise erfolgt vor der Inbetriebnahme die Magnetisierung eines weiteren Magneten 15 oder eines weiteren ferromagnetischen Gegenstücks 43 mit einer Magnetkraft mithilfe der Magnetisierungsvorrichtung 200, wobei die jeweiligen Magnete je nach Bedarf unterschiedlich stark magnetisiert werden.

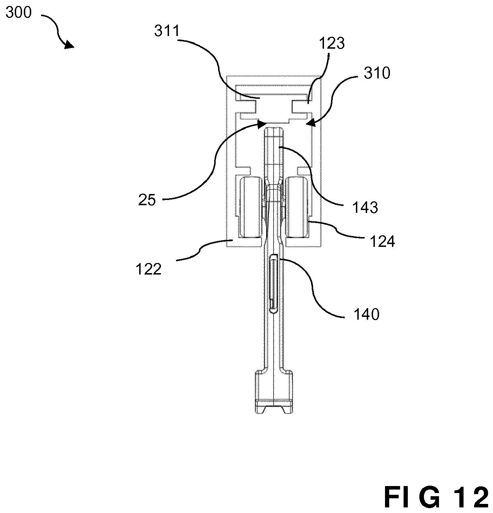

Fig. 12 zeigt eine weitere Förderanlage 300 zum Befördern von hängenden Gegenständen. Diese Förderanlage 300 ist vergleichbar zur Förderanlage 100 gemäss den Fig. 11 und Fig. 12 aufgebaut und weist eine Förderschienenanordnung 122 mit einer ersten Förderschiene 123 und einer zweiten Förderschiene 124 auf. Die Förderanlage 300 kann die Transportelemente 40, 140 gemäss den Fig. 9 und Fig. 10 aufnehmen.

In weiterer Folge wird die Förderanlage mit dem Transportelement 140 gemäss Fig. 10 beschrieben. Das Transportelement 140 ist mithilfe der Fördermittel 47 an der zweiten Förderschiene 124 gelagert und kann sich darin entlang der Förderstrecke bewegen. Die Förderanlage 300 weist einen Förderantrieb und zumindest ein Transportelement 143 auf. Als Zugmittel weist die Förderanlage 300 ein elektromagnetisches Schwebesystem 311 auf. Das elektromagnetisch Schwebesystem 311 ist mit dem ferromagnetischen Gegenstück 143 gekoppelt und überträgt die Förderkraft auf das ferromagnetischen Gegenstück 143, sodass sich diese entlang der Förderstrecke bewegen kann.

In den obigen Ausführungsbeispielen ist die Erfindung anhand von hängenden Transportelementen dargestellt. Sie könnte jedoch auch umgekehrt aufgebaut sein, indem die Transportelemente stehend oberhalb der Förderkette angeordnet sind. Insofern sind die Ansprüche nicht eingeschränkt auszulegen, sondern umfassen auch solche stehenden Aufbauten mit einer erfindungsgemässen Magnetkuppelanordnung.

### Bezugszeichenliste

- 10a-d: Magnetkupplungsanordnungen
- 11: Mitnehmerelement
- 12: Aufnahmekörper
- 13: Aufnahmespange
- 15: Magnet
- 17: Aufnahmespange
- 18: Aufnahmeraum
- 19: ferromagnetische Platte
- 25: Luftspalt
- 27: Bolzen
- 28: Bolzen
- 29: Sicherungseinrichtung für 27 bzw. 28
- 35: weitere Magnet
- 36: Isolierschicht
- 37: Grenzbereich
- 40: Transportelement
- 41: Grundkörper
- 42: Kupplungsabschnitt
- 43: ferromagnetisches Gegenstück
- 44: Kommunikationsabschnitt
- 45: Erkennungseinrichtung
- 46: Kupplungsabschnitt
- 47: Fördermittel
- 48: Eindringsicherung
- 49: Lastenabschnitt
- 51: Mitnehmerelement
- 52: Aufnahmekörper
- 53: Aufnahmespange
- 55: Magnet
- 57: Aufnahmespange
- 58: Aufnahmeraum
- 59: ferromagnetische Platte

- 100: Förderanlage
- 120: Zugmittel
- 121: Förderkette
- 122: Förderschienenanordnung
- 123: erste Förderschiene
- 124: zweite Förderschiene
- 125: Förderschienenöffnung
- 130: Stellvorrichtung
- 140: Transportelement
- 142: Kupplungsabschnitt
- 143: ferromagnetisches Gegenstück
- 151: Mitnehmerelement
- 152: Aufnahmekörper
- 153: Aufnahmespange
- 155: Magnet
- 157: Aufnahmespange
- 158: Aufnahmeraum
- 159: ferromagnetische Platte
- 160: ferromagnetische Platte
- 175: Luftspalt
- A: Kupplungsseite von 15 oder 15'
- B: Kupplungsseite von 43 oder 43' oder 143
- C: abgewandten Seite von A
- C': abgewandten Seite von A
- C": abgewandten Seite von A
- X: Abstand zwischen 120 und 40 oder 140

- 200: Magnetisierungsvorrichtung
- 300: Förderanlage
- 311: elektromagnetisch Schwebesystem

- 11': Mitnehmerelement
- 12': Aufnahmekörper
- 13': Aufnahmespange
- 15': Magnet
- 17': Aufnahmespange
- 18': Aufnahmeraum
- 19': ferromagnetische Platte
- 25': Luftspalt
- 27': Bolzen
- 28': Bolzen
- 29': Sicherungseinrichtung für 27 bzw. 28
- 43': ferromagnetisches Gegenstück
- 43": ferromagnetisches Gegenstück

- 100': Förderanlage
- 120': Zugmittel

## Patentansprüche

1. Magnetkupplungsanordnung (10a-e) in einer Förderanlage (100;100'), die wenigstens ein Mitnehmerelement (11; 11'; 151) zum Anordnen an einem Zugmittel (120; 120') der Förderanlage (100; 100') umfasst, wobei das Mitnehmerelement (11; 11'; 151) einen Aufnahmekörper (12; 12'; 152) mit einem Aufnahmeraum (18; 18'; 58) zum Aufnehmen von
a) wenigstens einen Magneten (15; 15'; 55; 155) im Aufnahmeraum (18; 18'; 58) aufweist, wobei der Magnet (15; 15'; 55; 155) an seiner Kupplungsseite (A) mit einer Kupplungsseite (B) eines ferromagnetischen Gegenstücks (43; 43'; 43"; 143) zur Förderkraftübertragung in kuppelbare Verbindung bringbar ist, oder
b) wenigstens einen ferromagnetischen Gegenstück (43; 43'; 43"; 143) für einen Magneten (15; 15'; 55; 155) im Aufnahmeraum (18; 18'; 58) aufweist, wobei das ferromagnetische Gegenstück (43; 43'; 43"; 143) an seiner Kupplungsseite (B) mit einer Kupplungsseite (A) eines Magneten (15; 15'; 55; 155) zur Förderkraftübertragung in kuppelbare Verbindung bringbar ist,
und wobei
an dem Magneten (15; 15'; 55; 155) an wenigstens einer der Kupplungsseite (A) abgewandten Seite (C; C'; C") eine ferromagnetische Platte (19; 19'; 59; 159; 160) angeordnet ist, um den Weg der magnetischen Kraftlinien an dieser Seite des Magnets (15; 15'; 55; 155) zu verkürzen.

2. Magnetkupplungsanordnung (10a-e) nach Anspruch 1, **dadurch gekennzeichnet, dass** das wenigstens eine ferromagnetische Gegenstück (43; 43'; 43"; 143) ebenfalls ein Magnet ist und bevorzugt jedem wenigstens einen Magnet (15; 15'; 55; 155) an wenigstens einer seiner der Kupplungsseite (A) abgewandten Seite (C; C'; C') eine ferromagnetische Platte (19; 19'; 59; 159; 160) zugeordnet ist, wobei die Magnete (15; 15'; 55; 155) so angeordnet sind, dass sich Nordpole und Südpole einander gegenüberstehen, wobei die ferromagnetische Platte (19; 19'; 59; 159; 160) bevorzugt an wenigstens einer Plattenseite winkelförmig ausbildet ist.

3. Magnetkupplungsanordnung (10a-e) nach Anspruch 1 oder 2, **dadurch gekennzeichnet, dass** sich zwischen der Kupplungsseite (A) des wenigstens einen Magneten (15; 15'; 55; 155) und der Kupplungsseite (B) des wenigstens einen ferromagnetischen Gegenstücks (43; 43'; 43"; 143) ein einstellbarer Luftspalt (25; 25'; 175) erstreckt, dessen räumliche Erstreckung in zumindest eine Richtung zwischen 0.05 mm und 5 mm ist, bevorzugt zwischen 0.1 mm und 3 mm ist.

4. Magnetkupplungsanordnung (10a-e) nach einem der Ansprüche 1 bis 3, **dadurch gekennzeichnet, dass** die ferromagnetische Platte (19; 19'; 59; 159; 160) zur Beeinflussung der Förderkraftübertragung lösbar und/oder relativ zum wenigstens einen Magneten verstellbar/einstellbar angeordnet ist und insbesondere die ferromagnetische Platte (19; 19'; 59; 159; 160) stoffschlüssig mit dem wenigstens einen Magneten (15; 15'; 55; 155) verbunden ist.

5. Magnetkupplungsanordnung (10a-e) nach einem der Ansprüche 1 bis 4, **dadurch gekennzeichnet, dass** dem oder jedem Magneten (15; 15'; 55; 155) wenigstens ein weiterer Magnet (35; 155) zur Seite gestellt ist, der ebenso an wenigstens einer der Kupplungsseite (A) abgewandten Seite (C; C'; C") mit der ferromagnetischen Platte (19) - vorteilhaft stoffschlüssig -verbunden ist.

6. Magnetkupplungsanordnung (10a-e) nach Anspruch 5, **dadurch gekennzeichnet, dass** der weitere Magnet (35; 135) seitlich benachbart zu dem oder jedem Magneten (35; 135) angeordnet ist und bevorzugt dessen Magnetpole (N-S) komplementär zu den Magnetpolen (S-N) des Magnets (15; 15'; 55; 155) ausgerichtet sind.

7. Magnetkupplungsanordnung (10a-e) nach Anspruch 5 oder 6 **dadurch gekennzeichnet, dass** zwischen dem Magnet (15; 15'; 55; 155) und dem wenigstens einen weiteren Magneten (35; 135) eine Isolierschicht vorgesehen ist, wobei die Isolierschicht bevorzugt durch einen Luftspalt (36) gebildet ist.

8. Magnetkupplungsanordnung (10a-e) nach einem der vorhergehenden Ansprüche, **dadurch gekennzeichnet, dass** die Magnete (15; 15'; 55; 155) und die weiteren Magnete (35; 135) quaderförmig ausgebildet sind und bevorzugt aus gesintertem Material aufgebaut sind.

9. Magnetkupplungsanordnung (10a-e) nach einem der vorhergehenden Ansprüche, **dadurch gekennzeichnet, dass** der Aufnahmekörper (12; 12'; 152) zumindest zwei Aufnahmespangen (13, 17; 13', 17'; 157, 158) aufweist, die zumindest die ferromagnetische Platte (19; 19'; 59; 159; 160) formschlüssig halten, und insbesondere der Aufnahmekörper (12; 12'; 152) aus unmagnetischem Material - bevorzugt aus Kunststoff - aufgebaut ist.

10. Magnetkupplungsanordnung (10a-e) nach einem der vorhergehenden Ansprüche, **dadurch gekennzeichnet, dass** der Aufnahmekörper (12; 12'; 152) zumindest einen Zugmittelanschluss (29; 29') für das Anschliessen des wenigstens einen Mitnehmerelements (11; 11'; 151) an ein Zugmittel (120; 120') aufweist, welcher bevorzugt als Bolzen (27, 28; 27', 28') ausgebildet ist.

11. Transportelement (40) für eine Förderanlage (100) mit einem Grundkörper (41), der einen Kupplungsabschnitt (42; 142) und einen Förderabschnitt (46) umfasst, wobei der Kupplungsabschnitt (42; 142) zum Ankoppeln an die Förderanlage (100) ausgebildet ist und zumindest ein ferromagnetisches Gegenstück (43; 43'; 43"; 143) aufweist und der Förderabschnitt (46) Fördermittel (47) zum Führen in der Förderanlage (100) aufweist, wobei das ferromagnetische Gegenstück (43; 43'; 43"; 143) in den Grundkörper eingearbeitet ist, bevorzugt mithilfe eines Umformverfahrens in den Kupplungsabschnitt (42; 142) eingearbeitet ist oder das ferromagnetische Gegenstück (43; 43'; 43"; 143) lösbar am Kupplungsabschnitt (42; 142) angeordnet ist.

12. Förderanlage (100) zum Befördern von hängenden oder stehenden Gegenständen umfassend ein Zugmittel (120; 120'), insbesondere eine Förderkette (121), und einen Förderantrieb (150) zum Antreiben des Zugmittels (120; 120'), wobei die Förderanlage (100) zumindest ein Mitnehmerelement (11; 11'; 151) und zumindest ein Transportelement (40; 140) umfasst, zwischen denen eine Magnetkupplungsanordnung (10a-e) nach einem der Ansprüche 1 bis 10 vorhanden ist.

13. Förderanlage (100) nach Anspruch 12 **dadurch gekennzeichnet, dass** eine Stellvorrichtung (130) zum Einstellen eines Abstands (X) zwischen dem Zugmittel (120; 120') und dem zumindest einen Transportelement (40; 140) vorhanden ist und bevorzugt die Förderanlage (100) ein weiteres Mitnehmerelement (11; 11'; 151) aufweist, wobei das weitere Mitnehmerelement (11; 11'; 151) entlang des Zugmittels (120; 120') zum ersten Mitnehmerelement (11; 11'; 151) beabstandet ist und der Abstand, bevorzugt zwischen 10 mm und 1500 mm, insbesondere zwischen 15 mm und 250 mm, entlang des Zugmittels (120; 120') einstellbar ist.

14. Verfahren zum Aufbau und zur Wartung einer Förderanlage (100; 100'), insbesondere nach Anspruch 12 oder 13, wobei das Verfahren folgende Schritte umfasst:
- Zur Verfügungstellung einer Magnetisierungsvorrichtung (200) an der Förderanlage (100; 100'),
- Magnetisierung wenigstens eines Magneten (15; 15') oder wenigstens eines ferromagnetischen Gegenstücks (43; 43'; 43"; 143) mit einer Magnetkraft mithilfe der Magnetisierungsvorrichtung (200) vor Inbetriebnahme der Förderanlage (100; 100').

15. Verwendung einer Magnetisierungsvorrichtung (200) zum Magnetisieren wenigstens eines Magneten (15; 15') oder wenigstens eines ferromagnetischen Gegenstücks (43; 43'; 43"; 143) an einer installierten Förderanlage (100; 100') mit Magnetkupplungsanordnungen (10a-e) insbesondere nach einem der Ansprüche 1 bis 10.
